# EUROPÄISCHE PATENTSCHRIFT

(11) **EP 1 614 589 B1**
(45) Veröffentlichungstag und Bekanntmachung des Hinweises auf die Patenterteilung: **22.08.2007**
(21) Anmeldenummer: 05013553.2
(22) Anmeldetag: 23.06.2005
(51) Int. Cl.: B60R 21/13

(54) **Cabriolet-Fahrzeug mit einem automatisiert ausfahrbaren Überrollschutz**
Convertible vehicle with automatically driven roll-over protection
Véhicule cabriolet avec arceau de sécurité à régulation automatique

(30) Priorität: 05.07.2004 DE 102004032564
(43) Veröffentlichungstag der Anmeldung: 11.01.2006
(73) Patentinhaber: Wilhelm Karmann GmbH, 49084 Osnabrück (DE)
(72) Erfinder: Bunsmann, Winfried, 49143 Bissendorf (DE)

(56) Entgegenhaltungen:
- DE-A1- 4 307 963
- US-A- 5 094 478
- US-A- 5 110 185
- US-A- 5 458 396

## Beschreibung

Die Erfindung betrifft ein Cabriolet-Fahrzeug mit zumindest einem bei Detektierung einer Unfallgefahr automatisiert in eine Schutzstellung hochschnellenden Überrollschutz nach dem Oberbegriff des Anspruchs 1.

Ein Fahrzeug nach dem Oberbegriff des Anspruchs 1 ist aus der US 5094478 bekannt.

Unter Cabriolet-Fahrzeugen werden hier auch solche Fahrzeuge verstanden, bei denen auch bei geöffnetem Dach Teile seitlicher oder quer verlaufender Rahmen starr stehenbleiben können.

Bei Geländeeinsätzen solcher Fahrzeuge kann es zum Beispiel durch große Seitenneigung des Fahrzeugs zum plötzlichen Ausfahren des Überrollschutzes kommen, obwohl keine Überschlagsgefahr besteht. Ein derartiges plötzliches Hochschnellen des Überrollschutzes kann eine Verletzungsgefahr für die Insassen oder eventuell neben dem Fahrzeug stehende Personen, etwa wenn mit einer Winde gearbeitet wird, mit sich bringen. Die Gefahr kann sowohl von einem direkten Kontakt mit dem Überrollschutz als auch von einem Einklemmen durch diesen, insbesondere bei einem Schwenkbügel, als auch von dem Schreck beim plötzlichen Ausfahren herrühren.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1. Vorteilhafte Ausgestaltungen und Weiterbildungen der Erfindung sind in den Ansprüchen 2 bis 7 angegeben.

Mit der erfindungsgemäßen Ausbildung eines Cabriolet-Fahrzeugs ist die Gefahr durch ein plötzliches ungewolltes Ausfahren des Überrollschutzes zuverlässig dadurch vermieden, daß dieser durch Überführung des Fahrzeugs in einen bestimmten Fahrmodus bereits automatisiert in Schutzstellung überführbar und dort halterbar ist. Insbesondere kann dieser Fahrmodus ein Geländefahrmodus sein, in dem erhebliche Neigungen und Verwindungen des Fahrzeugs ohne eine echte akute Unfallgefahr auftreten können. Die Verlagerung des Überrollschutzes tritt kontrolliert und nicht überraschend auf.

Anders als bei einem manuell betätigten Ausfahren des Überrollschutzes kann hier eine gewünschte Verlagerung in die Schutzstellung nicht vergessen werden. Eine Fehlbedienung ist daher ausgeschlossen.

Wenn vorteilhaft die erfindungsgemäße Verlagerung des Überrollschutzes in Schutzstellung durch Detektierung des Fahrmodus gegenüber dem Ausfahren bei Detektierung einer Unfallgefahr verlangsamt ist, ist die Verletzungsgefahr durch diese nicht unfallbedingte Verlagerung des Überrollschutzes weiter verringert.

Der Fahrmodus kann manuell vorwählbar sein, etwa durch eine voreinstellbare Getriebebeeinflussung, insbesondere eine Reduktion einer Übersetzung oder eine Zuschaltung eines Allradantriebs, oder eine voreinstellbare Fahrwerksbeeinflussung, insbesondere eine Erhöhung der Wattiefe des Fahrzeugs. Durch zum Beispiel Einlegen der entsprechenden Getriebeabstufung fährt dann der Überrollschutz kontrolliert und langsam aus.

Auch kann der Geländefahrmodus unabhängig von einer manuellen Beeinflussung während der Fahrt detektierbar sein, zum Beispiel durch eine andauernde hohe Seitenneigung bei jedoch sehr geringer Geschwindigkeit.

Ebenso kann nach Rückkehr in einen Straßenfahrmodus der Überrollschutz automatisiert aus der Schutzstellung rücküberführbar sein, um dadurch eine optisch ungestörte Seitenlinie zu erreichen.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine schematische, teilweise abgebrochene Seitenansicht eines erfindungsgemäßen Cabriolet-Fahrzeugs mit einem in Schutzstellung befindlichen Überrollschutz, der hier als Schwenkbügel ausgebildet ist,

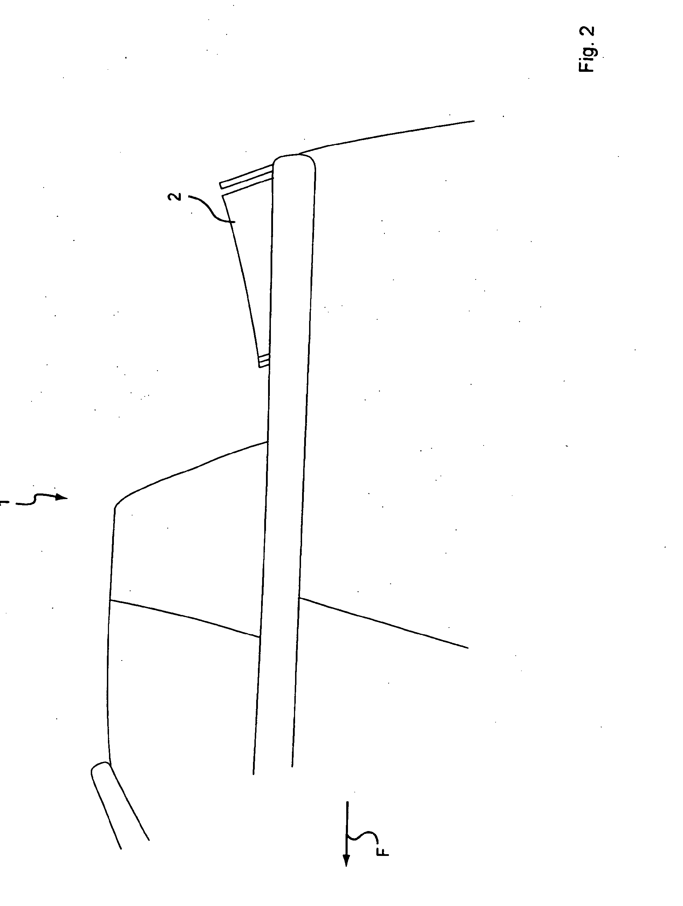

- Fig. 2: das Fahrzeug nach Fig. 1 mit rücküberführtem Überrollschutz.

Das erfindungsgemäße Cabriolet-Fahrzeug 1 kann sowohl ein mit einer Rückbank versehenes vier- oder fünfsitziges Fahrzeug als auch ein Zweisitzer sein.

Das bewegliche Dach kann beispielsweise ein sog. Retractable Hardtop mit festen Dachteilen oder ein klassisches Softtop bilden und manuell oder voll- oder teilautomatisch zu bewegen sein.

Zur Verringerung von Unfallfolgen, insbesondere bei einem Überschlag, ist ein beweglicher Überrollschutz 2 vorgesehen, hier ein über die Fahrzeugbreite durchgehender Überrollbügel. Auch ein durchgehender oder über die Fahrzeugbreite geteilter und mehr oder weniger vertikal ausfahrender Bügel ist beispielsweise möglich.

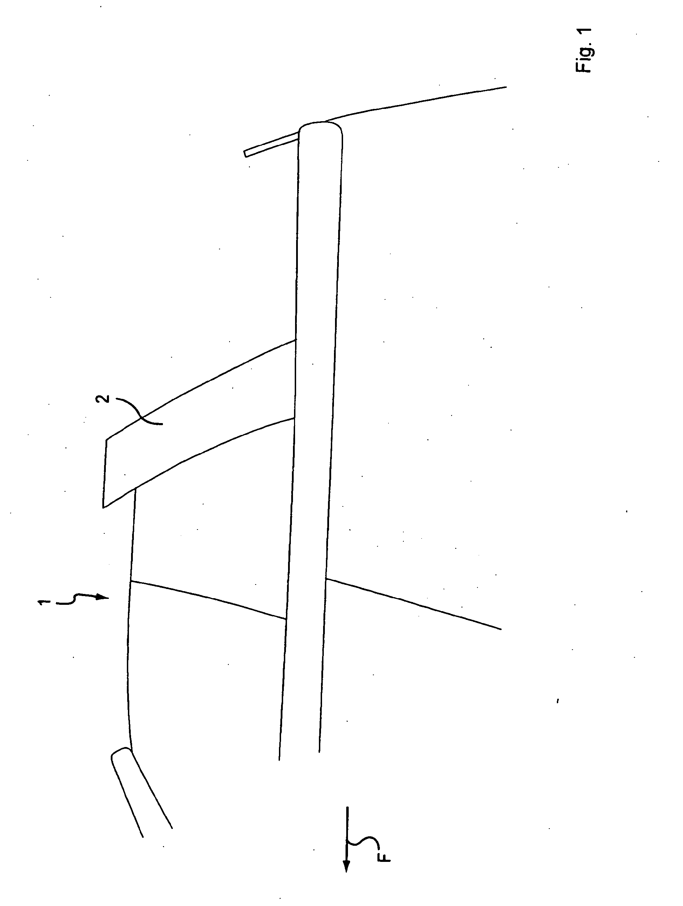

Der Überrollschutz 2 fährt bei Erkennen einer akuten Unfallgefahr automatisch in seine Schutzstellung (Fig. 1) aus.

Erfindungsgemäß ist neben diesem unfallbedingten Ausfahren der Überrollschutz 2 in einer zweiten, kontrollierten Weise außerhalb einer Detektierung einer Unfallgefahr durch Überführung des Fahrzeugs 1 in einen bestimmten Fahrmodus in die Schutzstellung nach Fig. 1 überführbar.

Dieser Fahrmodus, in dem der Überrollschutz in Schutzstellung steht, ist dabei ein Geländefahrmodus, in dem extreme Stellungen des Fahrzeugs 1, die ansonsten ein unbeabsichtigtes Hochschnellen des Bügels 2 zur Folge haben könnten, auftreten können.

In einem ersten Ausführungsbeispiel ist der Fahrmodus manuell vorwählbar, zum Beispiel durch eine voreinstellbare Getriebebeeinflussung, insbesondere eine Reduktion einer Übersetzung oder eine Zuschaltung eines Allradantriebs, oder eine voreinstellbare Fahrwerksbeeinflussung, insbesondere eine Erhöhung der Wattiefe des Fahrzeugs. Mit dieser Getriebe- oder Fahrwerksbeeinflussung ist dann automatisch und ohne weiteres Zutun des Fahrers die Verlagerung des Bügels 2 in Schutzstellung verbunden. Diese Verlagerung des Überrollschutzes 2 in Schutzstellung durch Detektierung des Fahrmodus ist gegenüber dem ruckhaften Ausfahren bei Detektierung einer Un-fallgefahr erheblich verlangsamt, so daß hierbei eine Verletzungsgefahr praktisch ausgeschlossen ist. Auch kann das Aufwärtsschwenken des Bügels 2 von einem Hinweiston untermalt sein.

In einem zweiten Ausführungsbeispiel ist der Geländefahrmodus unabhängig von einer manuellen Beeinflussung während der Fahrt detektierbar. Hierzu kann zum Beispiel ein erweitertes elektronisches Stabilitätsprogramm verwendet werden, das Geschwindigkeit und andere Fahrzeugparameter, wie etwa auch einen eingelegten Gang, eine gefahrene Geschwindigkeit und die Dauer eine Seitenneigung, mißt.

In beiden Ausführungsbeispielen kann der Überrollbügel 2 während des ganzen Beibehaltens des Geländefahrmodus in Schutzstellung gehalten bleiben und durch Überführung des Fahrzeugs in einen anderen Fahrmodus aus der Schutzstellung ohne weiteres Zutun des Fahrers rücküberführbar sein.

Da bestehende Elemente für die Bewegung des Überrollbügels 2 für die erfindungsgemäße Ausbildung verwendet werden, kann diese auch bei bestehenden Cabriolet-Fahrzeugen nachgerüstet werden.

## Patentansprüche

1. Cabriolet-Fahrzeug (1) mit einem bei Detektierung einer Unfallgefahr, insbesondere bei Überschreiten eines Grenzwinkels seitlicher Neigung, automatisiert in eine Schutzstellung ausfahrbaren Überrollschutz (2), insbesondere einem durchgehenden oder über die Fahrzeugbreite geteilten Überrollbügel,
**dadurch gekennzeichnet,**
**daß** durch Überführung des Fahrzeugs in einen bestimmten Fahrmodus zusätzlich der Überrollschutz (2) außerhalb einer Detektierung einer Unfallgefahr in Schutzstellung überführbt wird.

2. Cabriolet-Fahrzeug (1) nach Anspruch 1,
**dadurch gekennzeichnet,**
**daß** der Fahrmodus ein Geländefahrmodus ist.

3. Cabriolet-Fahrzeug (1) nach einem der Ansprüche 1 oder 2,
**dadurch gekennzeichnet,**
**daß** der Fahrmodus manuell vorwählbar ist.

4. Cabriolet-Fahrzeug (1) nach einem der Ansprüche 1 bis 3,
**dadurch gekennzeichnet,**
**daß** der Fahrmodus durch eine voreinstellbare Getriebebeeinflussung, insbesondere eine Reduktion einer Übersetzung oder eine Zuschaltung eines Allradantriebs, oder eine voreinstellbare Fahrwerksbeeinflussung, insbesondere eine Erhöhung der Wattiefe des Fahrzeugs (1), detektierbar ist.

5. Cabriolet-Fahrzeug (1) nach einem der Ansprüche 1 oder 2,
**dadurch gekennzeichnet,**
**daß** der Geländefahrmodus unabhängig von einer manuellen Beeinflussung während der Fahrt detektierbar ist.

6. Cabriolet-Fahrzeug (1) nach einem der Ansprüche 1 bis 5,
**dadurch gekennzeichnet,**
**daß** die Verlagerung des Überrollschutzes (2) in Schutzstellung durch Detektierung des Fahrmodus gegenüber dem Ausfahren bei Detektierung einer Unfallgefahr verlangsamt ist.

7. Cabriolet-Fahrzeug (1) nach einem der Ansprüche 1 bis 6,
**dadurch gekennzeichnet,**
**daß** der Überrollschutz (2) durch Überführung des Fahrzeugs in einen anderen Fahrmodus aus der Schutzstellung rücküberführbar ist.

## Claims

1. Convertible vehicle (1) comprising a roll-over protection device (2), in particular a continuous roll bar or a roll bar that is segmented over the vehicle width, which roll-over protection device (2) can be automatically deployed into a protection position when a danger of accident is detected, in particular when a critical angle of lateral tilt is exceeded,
**characterized in that**,
by a changeover of the vehicle to a specific driving mode, the roll-over protection device (2) is further guided into the protection position if no danger of accident is detected.

2. Convertible vehicle (1) according to claim 1,
**characterized in that**
said driving mode is an off-road driving mode.

3. Convertible vehicle (1) according to any one of claims 1 or 2,
**characterized in that**
the driving mode is manually preselectable.

4. Convertible vehicle (1) according to any one of claims 1 to 3,
**characterized in that**
the driving mode is detectable by a preselectable control of the gear unit, in particular by transmission reduction or by switching on a four-wheel drive, or by a preselectable control of the chassis, in particular by increasing the fording depth of the vehicle (1).

5. Convertible vehicle (1) according to any one of claims 1 or 2,
**characterized in that**
the off-road driving mode can be detected, independently of a manual control, while driving.

6. Convertible vehicle (1) according to any one of claims 1 to 5,
**characterized in that**
displacement of the roll-over protection device (2) into the protection position by detection of the driving mode is slowed down relative to deployment upon detection of a danger of accident.

7. Convertible vehicle (1) according to any one of claims 1 to 6,
**characterized in that**
the roll-over protection device (2) can be guided back out of the protection position by a changeover of the vehicle to a different driving mode.

## Revendications

1. Véhicule cabriolet (1) comprenant une protection au retournement (2) pouvant être amenée de manière automatisée dans une position de protection en cas de détection d'un risque d'accident, en particulier en cas de dépassement d'un angle limite d'inclinaison latérale, plus particulièrement un arceau de sécurité continu ou divisé sur la largeur du véhicule, **caractérisé en ce qu'**en amenant le véhicule dans un mode de circulation particulier, la protection au retournement (2) est de plus amenée dans une position de protection sans nécessiter la détection d'un risque d'accident.

2. Véhicule cabriolet (1) selon la revendication 1, **caractérisé en ce que** le mode de circulation est un mode de circulation tout terrain.

3. Véhicule cabriolet (1) selon l'une quelconque des revendications 1 ou 2, **caractérisé en ce que** le mode de circulation peut être présélectionné manuellement.

4. Véhicule cabriolet (1) selon l'une quelconque des revendications 1 à 3, **caractérisé en ce que** le mode de circulation peut être détecté par une intervention préréglable sur l'entraînement, en particulier une réduction d'une transmission ou une mise en circuit d'une traction sur les quatre roues, ou une intervention préréglable sur le mécanisme de roulement, plus particulièrement une augmentation de la garde au sol du véhicule (1).

5. Véhicule cabriolet (1) selon l'une quelconque des revendications 1 ou 2, **caractérisé en ce que** le mode de circulation tout terrain peut être détecté indépendamment d'une intervention manuelle durant la marche.

6. Véhicule cabriolet (1) selon l'une quelconque des revendications 1 à 5, **caractérisé en ce que** le déplacement de la protection au retournement (2) dans la position de protection est ralenti par détection du mode de circulation par rapport au déploiement lors de la détection d'un risque d'accident.

7. Véhicule cabriolet (1) selon l'une quelconque des revendications 1 à 6, **caractérisé en ce que** la protection au retournement (2) peut être ressortie de la position de protection par passage du véhicule dans un autre mode de circulation.
